# EUROPÄISCHE PATENTSCHRIFT

(11) **EP 3 246 202 B1**
(45) Veröffentlichungstag und Bekanntmachung des Hinweises auf die Patenterteilung: **09.09.2020**
(21) Anmeldenummer: 17171044.5
(22) Anmeldetag: 15.05.2017
(51) Int. Cl.: B60P 3/077, B60P 7/08, B60P 3/079

(54) **ZURRANKER**
LASHING ANCHOR
POINT D'ANCRAGE

(30) Priorität: 17.05.2016 AT 504532016
(43) Veröffentlichungstag der Anmeldung: 22.11.2017
(73) Patentinhaber: Kässbohrer Transport Technik GmbH, 5301 Eugendorf (AT)
(72) Erfinder: MADEREGGER, Gustav, 5221 Lochen am See (AT)
(74) Vertreter: Torggler & Hofinger Patentanwälte

(56) Entgegenhaltungen:
- WO-A1-2011/143042
- DE-A1- 2 945 550
- DE-U1-202010 008 543
- US-A1- 2007 207 003
- US-A1- 2010 143 064

## Beschreibung

Die Erfindung betrifft einen Zurranker mit den Merkmalen des Oberbegriffs des Anspruchs 1 und eine Verwendung eines solchen Zurrankers.

Ein gattungsgemäßer Zurranker geht aus der US 2008/0304930 A1 hervor. Der dort gezeigte Zurranker baut groß, weist eine Vielzahl von Teilen auf und erfordert eine aufwändige Herstellung. Der Schwenkteile dienen der Verankerung des Zurrankers an einem Gitter und der Zurranker kann nicht an einer einzigen Verankerungsöffnung verankert werden.

Ein gattungsfremder Zurranker geht aus der US 2007/207003 A1 hervor, welche einen lösbar an einem Rahmen einer Ladefläche eines Fahrzeugs befestigbaren Zurranschlag zeigt. Der Zurranschlag verfügt über einen Klemmmechanismus, an welchem in einer Ausführung über einen Gelenksbolzen drehbar zwei Platten mit Zurranschlägen in Form von Öffnungen gelagert sind. Die zwei Platten sind relativ zueinander um den gemeinsamen Gelenksbolzen verschwenkbar.

Aufgabe der Erfindung ist die Bereitstellung eines einfacheren, universeller einsetzbaren Zurrankers, der sich insbesondere zum Verzurren von Ladegut auf einem Nutzfahrzeug eignet.

Diese Aufgabe wird durch einen Zurranker mit den Merkmalen des Anspruchs 1 und die Verwendung eines solchen Zurrankers zum Verzurren von Ladegut auf einem Nutzfahrzeug gelöst. Vorteilhafte Ausführungsformen der Erfindung sind in den abhängigen Ansprüchen definiert.

Ein solcher Zurranker kann klein gebaut werden, weist nur wenige Teile auf und kann an einer einzigen Verankerungsöffnung verankert werden. Da sich die Schwenkteile quer zu einer durch das Gelenk gehenden Schwenkachse erstrecken, können sie in der zweiten Schwenkstellung (Sperrstellung der Schwenkteile bzw. Zurrstellung des Zurrankers) eine die Verankerungsöffnung bildende Umrandung hintergreifen. Weil die Schwenkteile in Richtung der Schwenkachse nebeneinander angeordnet sind, jeweils wenigstens eine Öffnung aufweisen und die an oder in unterschiedlichen Schwenkteilen angeordneten Öffnungen in der zweiten Schwenkstellung fluchten, ist auf einfache Weise in der zweiten Schwenkstellung ein Sperren der Schwenkteile in Bezug auf ein Verschwenken der Schwenkteile zueinander um die Schwenkachse durch Einführen eines Sperrmittels in die fluchtenden Öffnungen möglich. In einer Minimalvariante kommt die Erfindung also mit nur drei Teilen aus (erstes Schwenkteil, zweites Schwenkteil, Gelenk). In dieser Variante können die fluchtenden Öffnungen als Zurranschlag dienen.

Als Zurranschlag kann ein für eine Zugbelastung geeigneter Anschlagpunkt verstanden werden. Unter einer plattenförmigen Ausbildung der Schwenkteile kann eine im Wesentlichen ebene und im Vergleich zur Quer- bzw. Längserstreckung mit geringer Tiefenerstreckung (Materialstärke) erfolgende Ausbildung verstanden werden. Als eine Verankerungsöffnung kann dabei beispielsweise ein Durchgangsloch, insbesondere ein Langloch, in einer Platte, beispielsweise einem Lochblech, verstanden werden. Ebenso ist eine Verankerungsöffnung in Form einer T-Nut denkbar.

Wenn zumindest das erste Schwenkteil wenigstens einen Anschlag aufweist, kann sich zumindest das erste Schwenkteil an einem Rand einer Verankerungsöffnung abstützen. Dadurch kann ein Hineinfallen des Zurrankers in die Verankerungsöffnung vermieden werden. Auch kann ein Überführen des Zurrankers aus der ersten Schwenkstellung in die zweite Schwenkstellung erleichtert werden, da sich das erste Schwenkteil durch die Abstützung relativ zu der Verankerungsöffnung verschwenken lassen kann.

Es kann vorteilhaft sein, wenn die Fortsätze an unterschiedlichen Schwenkteilen in unterschiedliche Richtungen verlaufen. Dadurch kann ein Verspreizen des Zurrankers in einer Verankerungsöffnung erleichtert werden. Durch einen solchen Verlauf kann auch ein Hintergreifen einer Verankerungsöffnung erleichtert werden.

Es kann vorteilhaft sein, dass die Fortsätze quer zur Schwenkachse verlaufen. Dadurch kann einfach erreicht werden, dass die Fortsätze in den Schwenkstellungen des Zurrankers unterschiedliche Abstände aufweisen. Auch kann dadurch ein Hintergreifen einer Verankerungsöffnung durch die Fortsätze bei einem Verschwenken der Schwenkteile zueinander besonders einfach erreicht werden.

Es kann weiter von Vorteil sein, wenn der Zurranker ein Sperrmittel aufweist. Dadurch kann sich ein Sperren der Schwenkteile in Bezug auf ein Verschwenken der Schwenkteile zueinander ermöglichen lassen.

Dabei kann vorteilhaft sein, wenn das Sperrmittel den Zurranschlag aufweist und vorzugsweise ringförmig ausgebildet ist. Das Sperrmittel kann dadurch die Doppelfunktion des Sperrens der Schwenkteile in Bezug auf ein Verschwenken der Schwenkteile zueinander und der Bereitstellung eines Zurranschlags, also eines Anschlagpunkts für beispielsweise einen Zurrgurt, übernehmen. Dadurch kann sich die Anzahl der benötigten Teile, sowie die zur Herstellung nötigen Arbeitsschritte, verringern lassen. Durch eine im Wesentlichen ringförmige Ausbildung des Sperrmittels kann es zu einer vorteilhaften Ausbildung des Sperrmittels und des durch dieses ausgebildeten Zurranschlags kommen.

Auch kann vorteilhaft sein, dass der Zurranker ein Sperrmittel aufweist, welches in der zweiten Schwenkstellung der Schwenkteile in die fluchtenden Öffnungen zum Sperren der Schwenkteile in Bezug auf ein Verschwenken der Schwenkteile zueinander um die Schwenkachse einführbar ist. Durch ein solches Sperren oder Fixieren der Schwenkteile zueinander kann der Zurranker dauerhaft in der zweiten Schwenkstellung gehalten werden. Der Zurranker kann dadurch in der Verankerungsöffnung, insbesondere gegen Zugbelastungen, verankert werden. Wenn das erste Schwenkteil zusätzlich zumindest einen Anschlag zur Abstützung an einem Rand einer Verankerungsöffnung aufweist, kann der Zurranker in der Verankerungsöffnung gegen Schub- und Zugbelastungen verankert werden. Das Sperrmittel kann dabei lösbar ausgebildet sein.

Es kann weiter von Vorteil sein, wenn das Gelenk exzentrisch an den Schwenkteilen angeordnet ist und die Öffnungen zentral an den Schwenkteilen angeordnet sind. Dadurch kann beispielweise erreicht werden, dass die die an oder in unterschiedlichen Schwenkteilen angeordneten Öffnungen in der zweiten Schwenkstellung fluchten und bei einem Verschwenken der Schwenkteile zueinander aus dieser zweiten Schwenkstellung heraus zueinander versetzt zu liegen kommen. Ist in der zweiten Schwenkstellung ein Sperrmittel in die Öffnungen eingeführt, so kann ein solches Verschwenken der Schwenkteile zueinander verhindert werden.

Es kann vorteilhaft sein, dass das erste und das zweite Schwenkteil eine Kulisse aufweisen und die Öffnungen in den jeweiligen Kulissen ausgebildet sind. Die Kulissen sowie die Öffnungen können als Durchgangsloch und/oder als Ausnehmungen in den Schwenkteilen ausgebildet sein.

Dabei kann es vorteilhaft sein, wenn in oder an der Kulisse ein Sperrmittel verfahrbar ist und die im oder am ersten Schwenkteil angeordnete Kulisse eine mit der Öffnung verbundene Löseöffnung aufweist, wobei bei einem in der Löseöffnung angeordneten Sperrmittel das in der zweiten Schwenkstellung vorgesehene Sperren der Schwenkteile aufgehoben ist, und sich die Schwenkteile in der ersten Schwenkstellung befinden. Dabei kann ein Verfahren bzw. Bewegen des Sperrmittels aus der Öffnung in die Löseöffnung eine Sperre der relativen Verschwenkbarkeit der Schwenkteile zueinander aufgehoben werden. Auch kann durch ein solches Verfahren bzw. eine solche Bewegung der Zurranker von der zweiten Schwenkstellung in die erste Schwenkstellung überführt werden. Dadurch, dass die im oder am ersten Schwenkteil angeordnete Kulisse eine mit der Öffnung verbundene Löseöffnung aufweist kann bei entsprechender Ausformung der Öffnungen und der Kulissen bei einem Verfahren bzw. Bewegen eines Sperrmittels in die Löseöffnung ein Verschwenken der Schwenkteile zueinander bewirkt werden.

Dabei kann vorgesehen sein, dass bei einem Anheben des Zurrankers, wenn sich dieser in der zweiten Schwenkstellung der Schwenkteile befindet, durch das Eigengewicht des Zurrankers oder durch eine Kontaktierung zumindest eines der Fortsätze an einer Umrandung einer Verankerungsöffnung das Sperrmittel in die Löseöffnung gerät. So kann beispielsweise durch eine geeignete Positionierung des Sperrmittels innerhalb der Öffnungen und der Kulisse ein beabsichtigtes Überführen des Zurrankers aus der zweiten Schwenkstellung der Schwenkteile in die erste Schwenkstellung der Schwenkteile zueinander ermöglicht werden. Dies kann zum Beispiel ein beabsichtigtes Lösen eines in einer Verankerungsöffnung verankerten Zurrankers erlauben. Auch kann dadurch ein Zurranker durch sein Eigengewicht in der ersten Schwenkstellung gehalten werden.

Es kann weiter von Vorteil sein, wenn mit dem Zurranker ein Zurrgurt verbunden ist. Dadurch kann sich ein besonders leicht bedienbares Zurrzeug schaffen lassen. Dabei kann beispielsweise ein mit dem Zurrgurt verbundener Haken als Sperrmittel dienen. An Stelle eines Hakens kann auch ein mit einem Schraub- oder Steckbolzen verschließbarer Bügel (Schäkel) verwendet werden, wobei von diesem auch die Doppelfunktion des Sperrmittels und des Zurranschlags übernommen werden kann.

Bei einer Verwendung eines wie zuvor beschriebenen Zurrankers kann dieser zum Verzurren von Ladegut, insbesondere Fahrzeugen, auf einem Nutzfahrzeug, insbesondere auf einem Fahrblech eines Fahrzeugtransporters zum Einsatz kommen. Dabei kann das Fahrblech als Lochblech ausgebildet sein und der Zurranker in Löchern des Lochblechs verankerbar sein. Verschiedene Ausführungsbeispiele der Erfindung werden anhand der Figuren diskutiert. Es zeigen:
- Fig. 1a - 1c: ein erstes Ausführungsbeispiel eines erfindungsgemäßen Zurrankers,
- Fig. 2a - 2e: ein zweites Ausführungsbeispiel eines erfindungsgemäßen Zurrankers,
- Fig. 3: ein drittes Ausführungsbeispiel eines erfindungsgemäßen Zurrankers in einer Explosionsdarstellung und
- Fig. 4a - 4h: weitere Ansichten zum Ausführungsbeispiel der Fig. 3.

Bei allen Ausführungsbeispielen weist der Zurranker 1 ein erstes und ein zweites plattenförmiges Schwenkteil 2, 3 auf, die über ein Gelenk 4 miteinander verbunden sind und in Bezug auf eine durch das Gelenk 4 gehende Schwenkachse S relativ zueinander verschwenkbar sind.

Die Schwenkteile 2, 3 erstrecken sich quer zur Schwenkachse S. Jedes Schwenkteil 2, 3 weist einen (in den Figuren einzigen) Fortsatz 5 auf. Es können pro Schwenkteil 2, 3 mehrere, vorzugsweise parallel zueinander verlaufende Fortsätze 5 vorgesehen sein. Die an unterschiedlichen Schwenkteilen 2, 3 angeordneten Fortsätze 5 verlaufen in unterschiedlichen Richtungen. In der zweiten Schwenkstellung der Schwenkteile 2, 3 verlaufen die Fortsätze 5 in wenigstens annähernd entgegengesetzte Richtungen.

Die Schwenkteile 2, 3 weisen jeweils wenigstens eine Öffnung 6, 6', 7, 7' auf. Öffnungen 6, 6', 7, 7' die an oder in unterschiedlichen Schwenkteilen 2, 3 angeordnet sind, fluchten in der zweiten Schwenkstellung, sodass die Schwenkteile 2, 3 in der zweiten Schwenkstellung durch Einführen eines Sperrmittels 9 in die fluchtenden Öffnungen 6, 7 bzw. ggf. 6', 7' in Bezug auf ein Verschwenken der Schwenkteile 2, 3 zueinander um die Schwenkachse S sperrbar sind. Das Sperrmittel 9 kann Teil des Zurrankers 1 sein, dies ist aber nicht unbedingt erforderlich.

Zu den Figuren im Einzelnen:

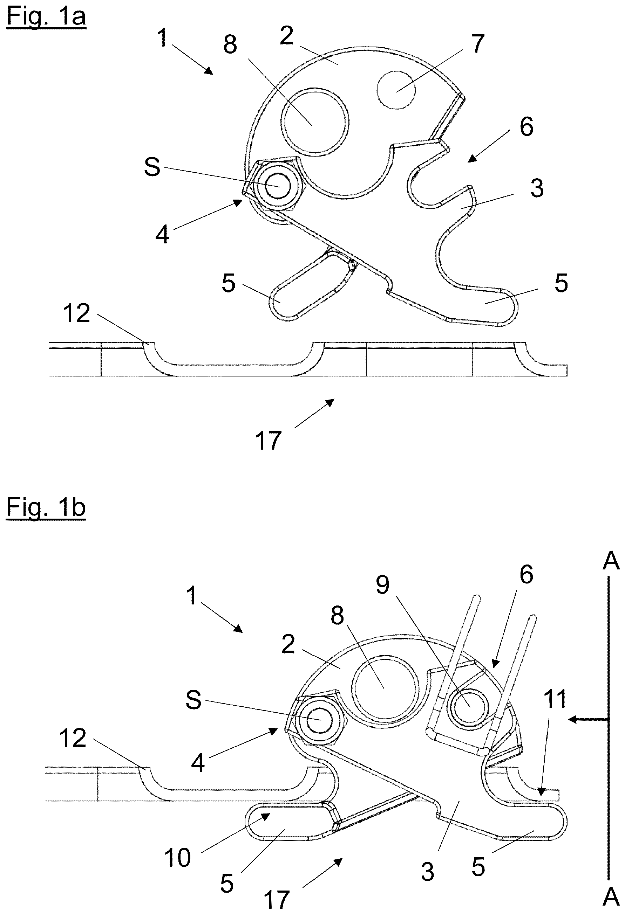

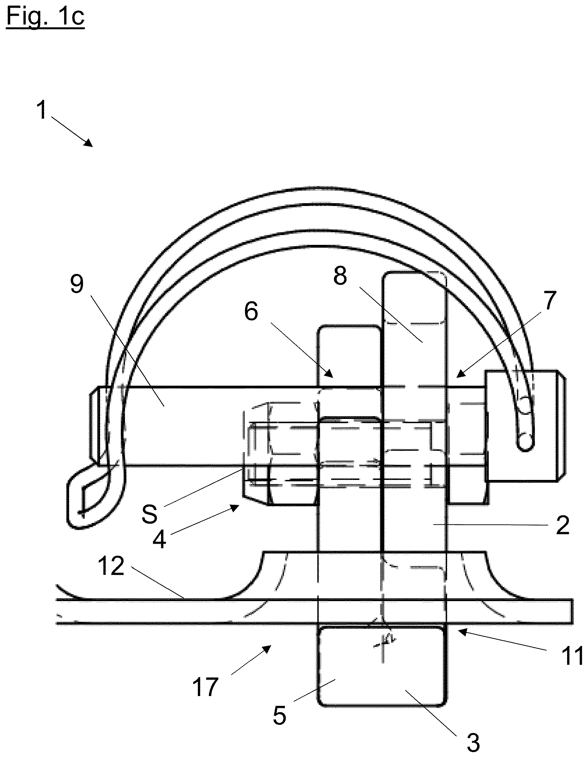

Fig. 1a, 1b, 1c zeigen ein erstes Ausführungsbeispiel der Erfindung. In den Fig. 1a und 1b verläuft die Schwenkachse S rechtwinklig zur Blattebene.

In Fig. 1a befinden sich die Schwenkteile 2, 3 in der ersten Schwenkstellung und die an unterschiedlichen Schwenkteilen 2, 3 angeordneten Fortsätze 5 weisen einen minimalen Abstand zueinander auf. In dieser Stellung kann der Zurranker 1 in eine an einem Lochblech 12 ausgebildete Verankerungsöffnung 17 eingeführt werden.

In Fig. 1b befinden sich die Schwenkteile 2, 3 in der zweiten Schwenkstellung und die an unterschiedlichen Schwenkteilen 2, 3 angeordneten Fortsätze 5 weisen einen maximalen Abstand zueinander auf. So können sie das Lochblech 12 im Bereich der Verankerungsöffnung 17 an den Positionen 10, 11 hintergreifen und der Zurranker 1 ist am Lochblech 12 verankert.

Bei diesem Ausführungsbeispiel ist die Öffnung 6 als Ausnehmung am ersten Schwenkteil 2 ausgebildet. Der Zurranschlag 8 ist in Form einer am ersten Schwenkteil 2 angeordneten Öse ausgebildet.

Fig. 1c ist eine Seitenansicht entlang der in Fig. 1b gezeigten Linie A - A und zeigt die Art des Sperrens bei diesem Ausführungsbeispiel. Die Schwenkteile 2, 3 befinden sich in der zweiten Schwenkstellung. Ein Sperrmittel 9 ist hier als Bolzen mit einem der Sicherung dienenden Sperrbügel ausgebildet. Alternativ kann Das Sperrmittel 9 beispielsweise auch als federbeaufschlagtes Druckstück ausgebildet sein. Das Sperrmittel 9 ist durch einen Bediener in der zweiten Schwenkstellung der Schwenkteile 2, 3 in eine Öffnung 7 des zweiten Schwenkteils 3 eingeführt worden und ragt in die am ersten Schwenkteil 2 angeordnete Öffnung 6 hinein. Bei einer am Zurranschlag 8 auf den Zurranker 1 einwirkenden Zugbelastung kann durch das in die Öffnungen 6, 7 eingeführte Sperrmittel 9 ein Verschwenken der Schwenkteile 2,3 zueinander verhindert werden und so der Zurranker 1 in der Verankerungsöffnung 17 sicher verankert werden.

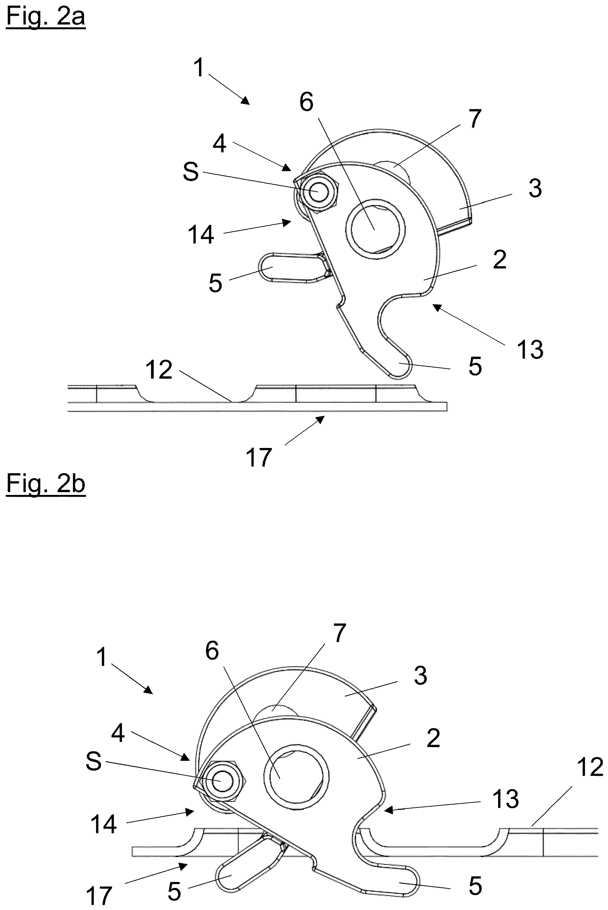

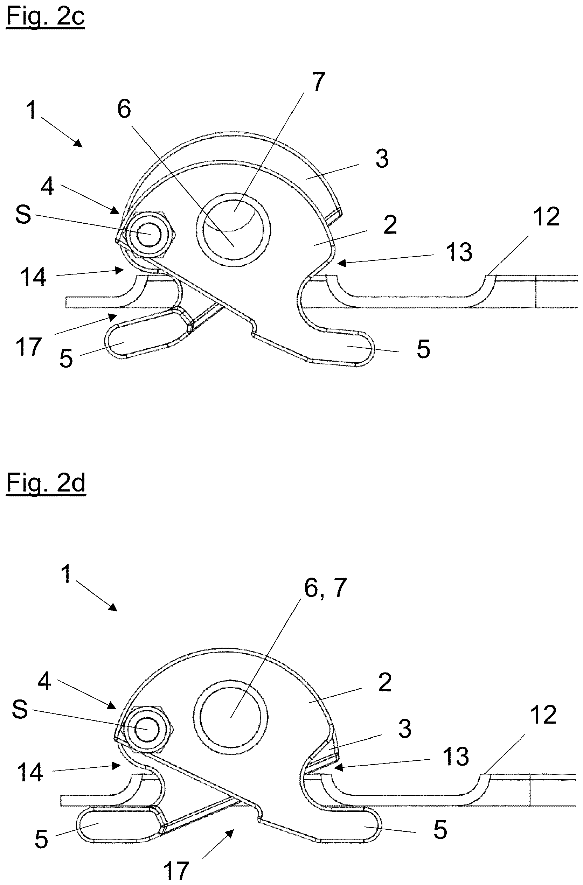

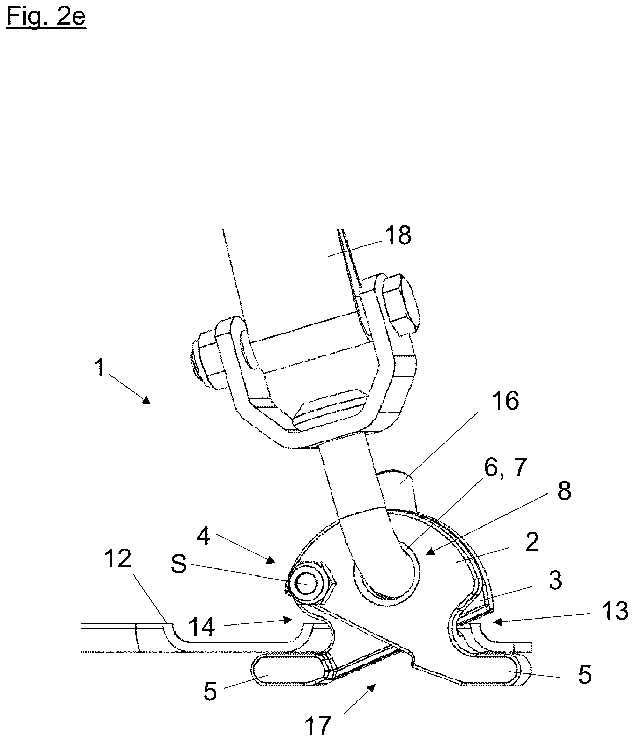

Fig. 2 zeigt ein weiteres Ausführungsbeispiel des Zurrankers 1, bei welchem im Unterschied zu dem in Fig. 1 gezeigten Ausführungsbeispiel die Öffnungen 6, 7 als Durchgangsöffnungen im Material der Schwenkteile 2, 3 ausgebildet sind und bei welchem zusätzlich Anschläge 13, 14 am ersten Schwenkteil 2 angeordnet sind.

Die Fig. 2a bis 2e zeigen eine Abfolge einer Verwendung des Zurrankers zum Verankern eines nicht dargestellten Ladeguts an einem ebenfalls nicht dargestellten Nutzfahrzeug. In den Fig. 2a bis 2c befinden sich die Schwenkteile 2, 3 in der ersten Schwenkstellung. In den Fig. 2d und 2e befinden sich die Schwenkteile 2, 3 in der zweiten Schwenkstellung.

Fig. 2a zeigt einen oberhalb eines im Bereich einer ausgewählten Verankerungsöffnung 17 dargestellten Lochblechs 12 angeordneten Zurranker 1.

Fig. 2b zeigt einen mit dem Anschlag 13 zur Anlage an einer Umrandung der Verankerungsöffnung 17 gebrachten Zurranker 1. Die Anschläge 13, 14 gestatten ein Abstützen des ersten Schwenkteils 2 an einer Oberseite einer Umrandung der Verankerungsöffnung 17. Weil das erste Schwenkteil 2 und damit der Zurranker 1 an der Umrandung abgestützt sind, ragen zunächst nur die Fortsätze 5 der Schwenkteile 2, 3 in die Verankerungsöffnung 17 hinein (vgl. Fig. 2b und 2c). Damit wird ein Durchfallen des Zurrankers 1 durch das Lochblech 12 verhindert. Durch weiteres Absenken des Zurrankers 1 relativ zum Lochblech 12 erfolgt ein Verschwenken des ersten Schwenkteils 2 relativ zum Lochblech 12 und zum zweiten Schwenkteil 3. Ebenso verschwenkt das zweite Schwenkteil 3 relativ zum Lochblech 12 und zum ersten Schwenkteil 2, sodass die Fortsätze 5 die Umrandung der Verankerungsöffnung 17 hintergreifen (Fig. 2c).

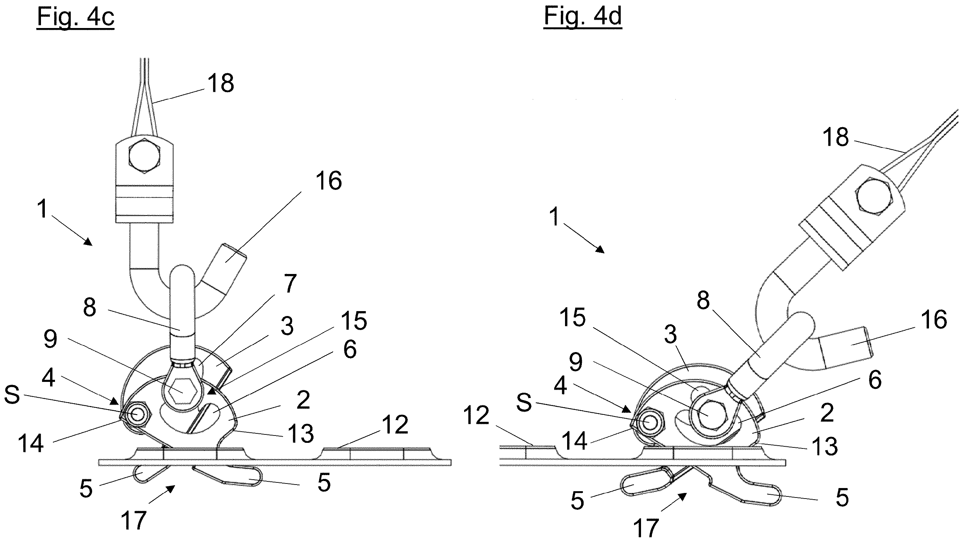

Fig. 2d zeigt die Situation nach erfolgtem Verschwenken der Schwenkteile 2, 3 in die zweite Schwenkstellung. Die Anschläge 13, 14 des ersten Schwenkteils 2 stützen sich an der Umrandung der Verankerungsöffnung 17 ab (auf Grund der Lage der in der Fig. 2d gewählten Schnittebene des Lochblechs 12 ist die Anlage des Schwenkteils 2 an der Umrandung der Öffnung dieser Figur nicht zu entnehmen, ist aber beispielsweise in Fig. 4d deutlich erkennbar). Die Öffnungen 6, 7 fluchten. Hierdurch kann ein Sperren der Schwenkteile 2, 3 relativ zueinander in Bezug auf ein Verschwenken um die Schwenkachse S durch Einführen eines Sperrmittels 9 (nicht dargestellt, siehe aber Fig. 2e) in die fluchtenden Öffnungen 6, 7 erfolgen.

Fig. 2e zeigt den Zurranker 1 im versperrten Zustand. In die fluchtenden Öffnungen 6, 7 ist ein Haken 16 eingeführt, mit dem ein Zurrgurt 18 verbunden ist. Die Öffnungen 6, 7 dienen in diesem Ausführungsbeispiel als Zurranschlag 8.

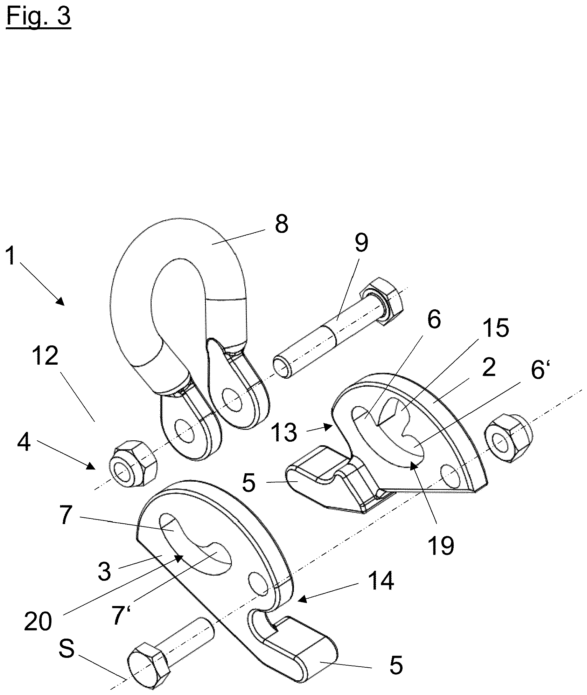

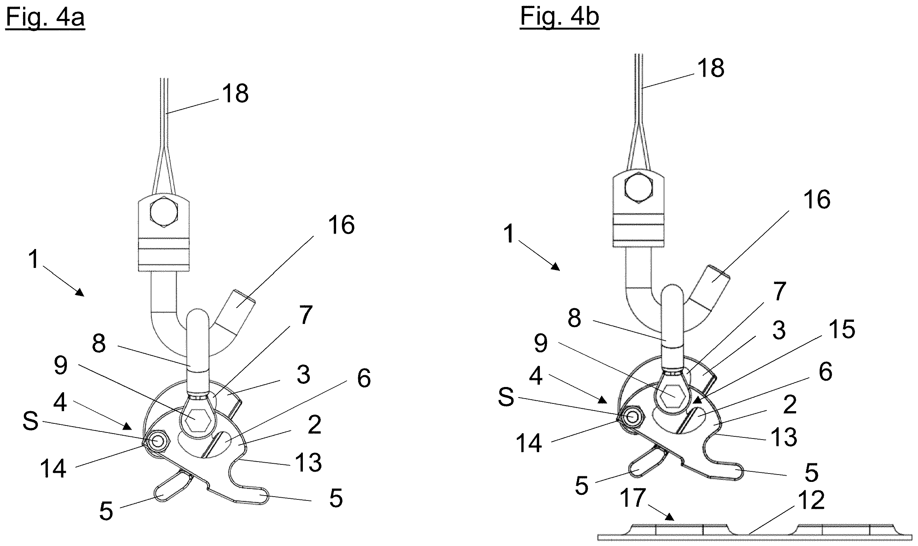

Fig. 3 zeigt ein weiteres Ausführungsbeispiel des Zurrankers 1, bei welchem so wie in Fig. 2 die Öffnungen 6, 7 als Durchgangsöffnungen im Material der Schwenkteile 2, 3 ausgebildet sind und bei welchem ebenfalls Anschläge 13, 14 am ersten Schwenkteil 2 angeordnet sind. Im Unterschied zur Fig. 2 weisen das erste und das zweite Schwenkteil 2, 3 eine Kulisse 19, 20 auf und die Öffnungen 6, 6', 7, 7' sind in den jeweiligen Kulissen 19, 20 ausgebildet, wobei in oder an der Kulisse 19, 20 ein Sperrmittel 9 (Schraubbolzen eines verschließbaren Bügels bzw. eines Schäkels) verfahrbar ist und die im oder am ersten Schwenkteil 2 angeordnete Kulisse 19 eine mit der Öffnung 6, 6' verbundene Löseöffnung 15 aufweist, wobei bei einem in der Löseöffnung 15 angeordneten Sperrmittel 9 das in der zweiten Schwenkstellung vorgesehene Sperren der Schwenkteile 2, 3 aufgehoben ist, und sich die Schwenkteile 2, 3 in der ersten Schwenkstellung befinden (siehe beispielsweise auch Fig. 4a). Die Fortsätze 5 der Schwenkteile 2, 3 weisen in Richtung der Schwenkachse S eine Verbreiterung auf, wodurch einerseits eine vorteilhaft große Anlagefläche am Lochblech 12 erreicht werden kann und andererseits auch ein Verschwenken der Schwenkteile 2, 3 über die erste Schwenkstellung hinaus verhindert werden kann (siehe etwa Fig. 2a). Die Kulissen 19, 20 mit den Öffnung 6, 6' und den Öffnungen 7, 7' weisen in der gezeigten Ausführung eine bei Verwendung des Zurrankers 1 in Richtung einer am Sperrmittel 9 angreifenden Kraft verlaufende Krümmung auf.

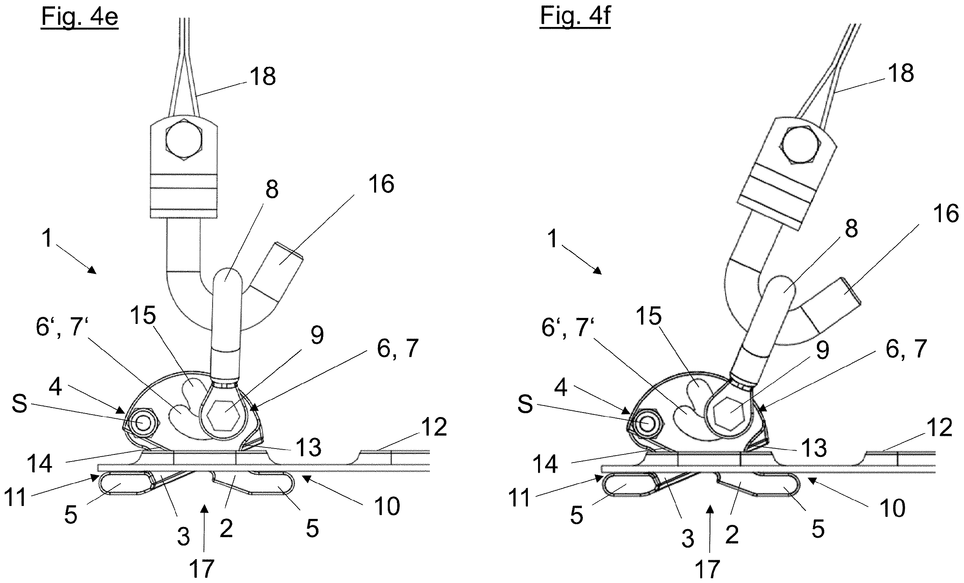

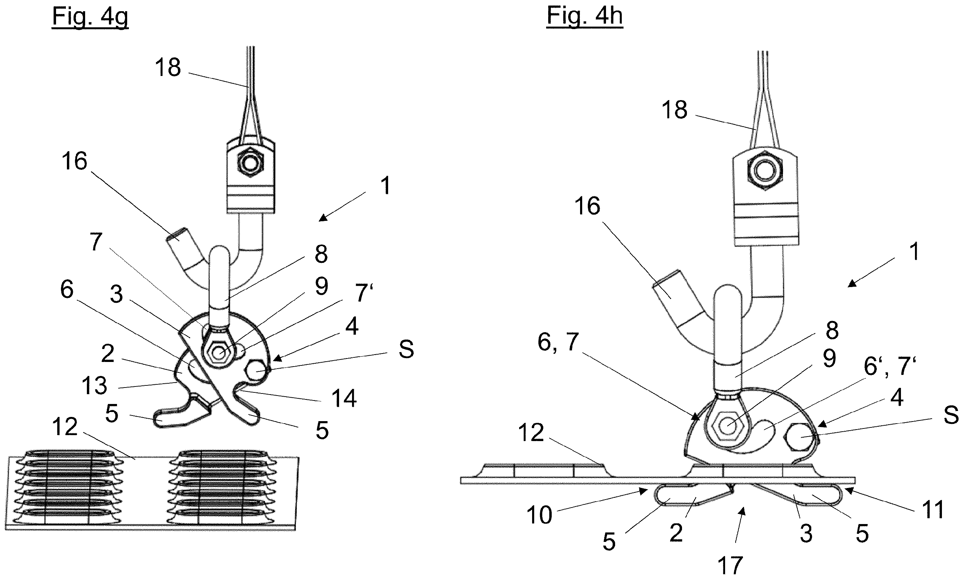

Die Fig. 4a bis 4f zeigen eine Abfolge einer Verwendung des Zurrankers zum Verankern eines nicht dargestellten Ladeguts an einem ebenfalls nicht dargestellten Nutzfahrzeug. In den Fig. 4a bis 4c befinden sich die Schwenkteile 2, 3 in der ersten Schwenkstellung. In den Fig. 4d bis 4f befinden sich die Schwenkteile 2, 3 in der zweiten Schwenkstellung. Die Fig. 4g und 4h zeigen Rückansichten zu den Fig. 4b bzw. 4e.

Fig. 4a zeigt einen Zurranker 1 mit zwei zueinander um die Schwenkachse S in die erste Schwenkstellung verschwenkten Schwenkteilen 2, 3. Ein mit einem Schraubbolzen verschlossener Bügel (Schäkel) bildet den Zurranschlag 8 sowie das Sperrmittel 9 aus. Ein Zurrgurt 18 ist mit einem Haken 16 am Zurranschlag 8 angeschlagen. Alternativ zur gezeigten Ausführung kann der Zurrgurt 18 direkt am Zurranschlag 8 anschlagen. Dadurch kann beispielsweise ein unverlierbares Zurrzeug bereitgestellt werden.

Der Zurranker 1 ist in Fig. 4a durch sein Eigengewicht in der ersten Schwenkstellung gehalten, da sich das Sperrmittel 9 in der Löseöffnung 15 des ersten Schwenkteils 2 befindet und durch die entsprechende Ausrichtung der Löseöffnung 15 und durch Einfluss der Schwerkraft in diese gedrängt wird. Der zweite Schwenkteil 3 ist durch das Eintreten des Sperrmittels in die Löseöffnung 15 des ersten Schwenkteils 2 verschwenkt (angehoben) worden und der Zurranker 1 somit in die erste Schwenkstellung gebracht worden (siehe dazu auch Fig. 4g).

Die Fig. 4b bis 4f zeigen eine Abfolge einer Verankerung des Zurrankers 1 in einer Verankerungsöffnung 17 in einem Lochblech 12.

Fig. 4b zeigt dabei einen oberhalb eines im Bereich einer ausgewählten Verankerungsöffnung 17 dargestellten Lochblechs 12 angeordneten Zurranker 1. Fig. 4g zeigt eine Rückansicht der Fig. 4b

In Fig. 4c ist der Zurranker 1 teilweise in die Verankerungsöffnung 17 eingeführt worden. Dabei kann durch die Ausformung und Anordnung der Löseöffnung 15 der Zurranker bei einer Aufhängung am Zurranschlag 8 so zu liegen kommen, dass der Fortsatz 5 des ersten Schwenkteils 2 bei einem Absenken des Zurrankers 1 als erster in die Verankerungsöffnung 17 hineinragt, wodurch ein Einführen des Zurrankers 1 erleichtert werden kann.

Bein einem weiteren Absenken des Zurrankers 1 kann dieser wie in Fig. 4d gezeigt mit dem Anschlag 13 an einer Umrandung der Verankerungsöffnung 17 zu Anlage kommen. Die Anschläge 13, 14 gestatten generell ein Abstützen des ersten Schwenkteils 2 an einer Oberseite einer Umrandung der Verankerungsöffnung 17, womit auch ein Durchfallen des Zurrankers 1 durch das Lochblech 12 verhindert werden kann. Durch das weitere Absenken des Zurrankers 1 relativ zum Lochblech 12 ist ein Verschwenken des ersten Schwenkteils 2 relativ zum Lochblech 12 und zum zweiten Schwenkteil 3 erfolgt. Ebenso verschwenkt das zweite Schwenkteil 3 relativ zum Lochblech 12 und zum ersten Schwenkteil 2, sodass die Fortsätze 5 die Umrandung der Verankerungsöffnung 17 hintergreifen. Das Sperrmittel 9 ist in der Löseöffnung 15 verfahren worden, wodurch der Zurranker 1 in Richtung dessen ersten Schwenkstellung verschwenkt werden konnte. Bei weiterem Verschwenken der Schwenkteile 2, 3 zueinander kann das Sperrmittel 9 aus der Löseöffnung 15 des ersten Schwenkteils 2 austreten und in die in der ersten Schwenkstellung fluchtenden Öffnungen 6, 7 bzw. 6', 7' eingeführt werden.

Fig. 4e zeigt die Situation nach erfolgtem weiteren Verschwenken der Schwenkteile 2, 3 in die zweite Schwenkstellung, wobei das Sperrmittel 9 in die in dieser ersten Schwenkstellung miteinander fluchtenden Öffnungen 6, 7 eingeführt sind. Dadurch kann ein Sperren der Schwenkteile 2, 3 relativ zueinander in Bezug auf ein Verschwenken um die Schwenkachse S erreicht werden, der Zurranker 1 ist somit in der Verankerungsöffnung 17 verankert. Die Anschläge 13, 14 des ersten Schwenkteils 2 stützen sich an der Umrandung der Verankerungsöffnung 17 ab. Bei Ausübung einer Zugbelastung auf den Zurranschlag 8 des Zurrankers 1 kommen die an den Positionen 10, 11 hintergreifenden Fortsätze 5 mit dem Lochblech an der dem Zurranschlag 1 abgewandten Seite des Lochblechs 12 zur Anlage. Gemeinsam mit dem einem Verschwenken der Schwenkteile 2, 3 entgegenwirkenden Sperrmittel in den Öffnungen 6, 7 verhindern die hintergreifenden Anschläge 5 ein Ausziehen des Zurranschlags 1 aus der Verankerungsöffnung 17.

Bei einer wie in Fig. 4f gezeigten Änderung der Zugrichtung am Zurranschlag 8 verbleibt das Sperrmittel 9 in den Öffnungen 6,7 wodurch der Zurranker weiter in der Verankerungsöffnung 17 verankert bleibt. Durch eine Anordnung des Sperrmittels 9 in den Öffnungen 6', 7' kann eine im Wesentlichen von der gezeigten Zugbelastung weg weisende (also in Fig. 4f nach links gerichtete) Zugbelastung des Zurrankers 1 erlaubt werden. Dadurch kann beispielsweise die Verwendung des Zurrankers 2 unabhängig von dessen Orientierung in Bezug auf die Verankerungsöffnung 17 möglich sein. Durch eine in Richtung der in Gebrauch beabsichtigten Zugrichtung gekrümmte Ausbildung der Kulissen 19, 20 mit den Öffnungen 6, 6', 7, 7' kann erreicht werden, dass das Sperrmittel 9 bei einer am Zurranschlag 8 anschlagenden Zugbelastung auf den Zurranker 1 in die Öffnungen 6,7 bzw. 6', 7' hinein gedrängt wird. Auch kann dadurch erreicht werden, dass bei einer Entlastung des Zurranschlags 8 das Sperrmittel 9 entlang der Kulisse 19 in Richtung der Löseöffnung 15 verfährt bzw. verfahren werden kann und durch ein erneutes Anheben in Richtung der die Löseöffnung 15 in diese eintreten kann. Dadurch kann eine Ein-Hand-Bedienung des Zurrankers 1 ermöglicht werden.

### Bezugszeichenliste:

- 1: Zurranker
- 2: erstes Schwenkteil
- 3: zweites Schwenkteil
- 4: Gelenk
- 5: Fortsatz
- 6, 6': Öffnung im ersten Schwenkteil
- 7, 7': Öffnung im zweiten Schwenkteil
- 8: Zurranschlag
- 9: Sperrmittel
- 10: Position
- 11: Position
- 12: Lochblech
- 13: Anschlag an Schwenkteil
- 14: Anschlag an Schwenkteil
- 15: Löseöffnung
- 16: Haken
- 17: Verankerungsöffnung
- 18: Zurrgurt
- 19: Kulisse
- 20: Kulisse
- S: Schwenkachse

## Patentansprüche

1. Zurranker (1) zum Verankern an einer Verankerungsöffnung (17) mit:
- einem Zurranschlag (8),
- einem ersten plattenförmigen Schwenkteil (2),
- einem zweiten plattenförmigen Schwenkteil (3),
- einem Gelenk (4), welches die Schwenkteile (2, 3) relativ zueinander schwenkbar verbindet,
**dadurch gekennzeichnet, dass** die Schwenkteile (2, 3)
- sich quer zu einer durch das Gelenk (4) gehenden Schwenkachse (S) erstrecken,
- in Richtung der Schwenkachse (S) nebeneinander angeordnet sind,
- jeweils wenigstens einen Fortsatz (5) aufweisen,
- zwischen einer ersten und einer zweiten Schwenkstellung um die Schwenkachse (S) zueinander verschwenkbar sind, wobei die auf unterschiedlichen Schwenkteilen (2, 3) angeordneten Fortsätze (5) in der ersten Schwenkstellung einen ersten Abstand aufweisen und in der zweiten Schwenkstellung einen zweiten, größeren Abstand aufweisen, wobei die Fortsätze (5) dazu ausgebildet sind, in der zweiten Schwenkstellung eine die Verankerungsöffnung (17) bildende Umrandung zu hintergreifen, und
- jeweils wenigstens eine Öffnung (6, 6', 7, 7') aufweisen, wobei die an oder in unterschiedlichen Schwenkteilen (2, 3) angeordneten Öffnungen (6, 6', 7, 7') in der zweiten Schwenkstellung der Schwenkteile (2, 3) fluchten, sodass die Schwenkteile (2, 3) in der zweiten Schwenkstellung durch Einführen eines Sperrmittels (9) in die fluchtenden Öffnungen (6, 6', 7, 7') in Bezug auf ein Verschwenken der Schwenkteile (2, 3) zueinander um die Schwenkachse (S) sperrbar sind.

2. Zurranker nach Anspruch 1, wobei zumindest das erste Schwenkteil (2) wenigstens einen Anschlag (13, 14) aufweist, mit welchem zumindest das erste Schwenkteil (2, 3) an einem Rand der Verankerungsöffnung (17) abstützbar ist.

3. Zurranker nach wenigstens einem der vorangehenden Ansprüche, wobei die Fortsätze (5) an unterschiedlichen Schwenkteilen (2, 3) in unterschiedliche Richtungen verlaufen.

4. Zurranker nach wenigstens einem der vorangehenden Ansprüche, wobei die Fortsätze (5) quer zur Schwenkachse (S) verlaufen.

5. Zurranker nach wenigstens einem der vorangehenden Ansprüche, wobei der Zurranker (1) ein Sperrmittel (9) aufweist.

6. Zurranker nach dem vorangehenden Anspruch, wobei das Sperrmittel (9) den Zurranschlag (8) aufweist und vorzugsweise ringförmig ausgebildet ist.

7. Zurranker nach einem der beiden vorangehenden Ansprüche, wobei das Sperrmittel (9) in der zweiten Schwenkstellung der Schwenkteile (2, 3) in die fluchtenden Öffnungen (6, 6', 7, 7') zum Sperren der Schwenkteile (2, 3) in Bezug auf ein Verschwenken der Schwenkteile (2, 3) zueinander um die Schwenkachse (S) einführbar ist.

8. Zurranker nach wenigstens einem der vorangehenden Ansprüche, wobei das Gelenk (4) exzentrisch an den Schwenkteilen (2, 3) angeordnet ist und die Öffnungen (6, 6', 7, 7') zentral an den Schwenkteilen (2, 3) angeordnet sind.

9. Zurranker nach wenigstens einem der vorangehenden Ansprüche, wobei das erste und das zweite Schwenkteil (2, 3) eine Kulisse (19, 20) aufweisen und die Öffnungen (6, 6', 7, 7') in den jeweiligen Kulissen (19, 20) ausgebildet sind.

10. Zurranker nach dem vorangehenden Anspruch, wobei in oder an der Kulisse (19, 20) ein Sperrmittel (9) verfahrbar ist und die im oder am ersten Schwenkteil (2) angeordnete Kulisse (19) eine mit der Öffnung (6, 6') verbundene Löseöffnung (15) aufweist, wobei bei einem in der Löseöffnung (15) angeordneten Sperrmittel (9) das in der zweiten Schwenkstellung vorgesehene Sperren der Schwenkteile (2, 3) aufgehoben ist, und sich die Schwenkteile (2, 3) in der ersten Schwenkstellung befinden.

11. Zurranker nach dem vorangehenden Anspruch, wobei bei einem Anheben des Zurrankers (1), wenn sich dieser in der zweiten Schwenkstellung der Schwenkteile (2, 3) befindet, durch das Eigengewicht des Zurrankers (1) oder durch eine Kontaktierung zumindest eines der Fortsätze (5) an der Umrandung der Verankerungsöffnung (17) das Sperrmittel (9) in die Löseöffnung (15) gerät.

12. Zurranker nach wenigstens einem der vorangehenden Ansprüche, wobei mit dem Zurranker (1) ein Zurrgurt (18) verbunden ist.

13. Verwendung eines Zurrankers nach wenigstens einem der vorangehenden Ansprüche zum Verzurren von Ladegut, insbesondere Fahrzeugen, auf einem Nutzfahrzeug, insbesondere auf einem Fahrblech eines Fahrzeugtransporters.

## Claims

1. A lashing anchor (1) for anchoring to an anchoring opening (17) comprising
- a lashing abutment (8),
- a first plate-shaped pivot portion (2),
- a second plate-shaped pivot portion (3), and
- a joint (4) which connects the pivot portions (2, 3) pivotably relative to each other,
**characterised in that** the pivot portions (2, 3)
- extend transversely relative to a pivot axis (S) passing through the joint (4),
- are arrange in mutually juxtaposed relationship in the direction of the pivot axis (S),
- each have at least one extension (5),
- are pivotable about the pivot axis (S) relative to each other between a first and a second pivotal position, wherein the extensions (5) arranged on different pivot portions (2, 3) are at a first spacing in the first pivotal position and are at a second larger spacing in the second pivotal position, wherein the extensions (5) are adapted to engage in the second pivotal position behind an edge forming the anchoring opening (17), and
- each have at least one opening (6, 6', 7, 7'), wherein the openings (6, 6', 7, 7') arranged at or in different pivot portions (2, 3) are aligned in the second pivotal position of the pivot portions (2, 3) so that the pivot portions (2, 3) in the second pivotal position are lockable in relation to a pivotal movement of the pivot portions (2, 3) relative to each other about the pivot axis (S) by inserting a locking means (9) into the aligned openings (6, 6', 7, 7').

2. A lashing anchor according to claim 1 wherein at least the first pivot portion (2) has at least one abutment (13, 14) with which at least the first pivot portion (2, 3) can be supported at an edge of the anchoring opening (17).

3. A lashing anchor according to at least one of the preceding claims wherein the extensions (5) on different pivot portions (2, 3) extend in different directions.

4. A lashing anchor according to at least one of the preceding claims wherein the extensions (5) extend transversely relative to the pivot axis (S).

5. A lashing anchor according to at least one of the preceding claims wherein the lashing anchor (1) has a locking means (9).

6. A lashing anchor according to the preceding claims wherein the locking means (9) has a lashing abutment (8) and is preferably annular.

7. A lashing anchor according to one of the two preceding claims wherein the locking means (9) in the second pivotal position of the pivot portions (2, 3) can be introduced into the aligned openings (6, 6', 7, 7') for locking the pivot portions (2, 3) in relation to a pivotal movement of the pivot portions (2, 3) relative to each other about the pivot axis (S).

8. A lashing anchor according to at least one of the preceding claims wherein the joint (4) is arranged eccentrically on the pivot portions (2, 3) and the openings (6, 6', 7, 7') are arranged centrally on the pivot portions (2, 3).

9. A lashing anchor according to at least one of the preceding claims wherein the first and the second pivot portions (2, 3) have a sliding guide (19, 20) and the openings (6, 6', 7, 7') are provided in the respective sliding guides (19, 20).

10. A lashing anchor according to the preceding claim wherein a locking means (9) is moveable in or at the sliding guide (19, 20) and the sliding guide (19) which is arranged in or at the first pivot portion (2) has a release opening (15) connected to the opening (6, 6'), wherein with a locking means (9) arranged in the release opening (15) the locking action of the pivot portions (2, 3) which occurs in the second pivotal position is removed and the pivot portions (2, 3) are in the first pivotal position.

11. A lashing anchor according to the preceding claim wherein upon lifting of the lashing anchor (1) when it is in the second pivotal position of the pivot portions (2, 3) the locking means (9) moves into the release opening due to the dead weight of the lashing anchor (1) or by contact of at least one of the extensions (5) at the edge of the anchoring opening (17).

12. A lashing anchor according to at least one of the preceding claims wherein a lashing strap (18) is connected to the lashing anchor (1).

13. Use of a lashing anchor according to at least one of the preceding claims for lashing loads, in particular vehicles, on a commercial vehicle, in particular on a load deck of a vehicle transporter.

## Revendications

1. Point d'ancrage (1) pour ancrer une ouverture d'ancrage (17) avec:
- une butée d'ancrage (8),
- une première partie pivotante en forme de plaque (2),
- une deuxième partie pivotante en forme de plaque (3),
- une articulation (4) qui relie les deux parties pivotantes (2, 3) de façon pivotante l'une par rapport à l'autre
**caractérisé en ce que** les parties pivotantes (2, 3)
- s'étendent transversalement à un pivot (S) passant à travers l'articulation (4),
- sont disposées l'une à côté de l'autre dans le sens du pivot (S),
- présentent à chaque fois au moins un prolongement (5),
- peuvent pivoter l'une par rapport à l'autre entre une première et une deuxième position de pivotement autour du pivot (S), dans lequel les prolongements (5) disposés sur les différentes parties pivotantes (2, 3) présentent un premier écartement dans la première position de pivotement et présentant un deuxième écartement plus grand dans la deuxième position de pivotement, dans lequel les prolongements (5) sont conçus pour saisir par l'arrière, dans la deuxième position de pivotement, une bordure formant l'ouverture d'ancrage (17), et
- présentent à chaque fois au moins une ouverture (6, 6', 7, 7'), dans laquelle les ouvertures (6, 6', 7, 7') disposées sur ou dans les différentes parties pivotantes (2, 3) affleurent dans la deuxième position de pivotement des parties pivotantes (2, 3), de sorte que les parties pivotantes (2, 3) peuvent être bloquées dans la deuxième position de pivotement par l'introduction d'un moyen de blocage (9) dans les ouvertures affleurantes (6, 6', 7, 7') par rapport à un pivotement des parties pivotantes (2, 3) l'une par rapport à l'autre autour du pivot (S).

2. Point d'ancrage selon la revendication 1, dans lequel au moins la première partie pivotante (2) présente au moins une butée (13, 14), avec laquelle au moins la première partie pivotante (2, 3) peut être appuyée à un bord de l'ouverture d'ancrage (17).

3. Point d'ancrage selon au moins l'une des revendications précédentes, dans lequel les prolongements (5) sur les différentes parties pivotantes (2, 3) passent dans différents sens.

4. Point d'ancrage selon au moins l'une des revendications précédentes, dans lequel les prolongements (5) passent transversalement au pivot (S).

5. Point d'ancrage selon au moins l'une des revendications précédentes, dans lequel le point d'ancrage (1) présente un moyen de blocage (9).

6. Point d'ancrage selon la revendication précédente, dans lequel le moyen de blocage (9) présente la butée d'ancrage (8) et est conçu de préférence en forme d'anneau.

7. Point d'ancrage selon l'une des deux revendications précédentes, dans lequel le moyen de blocage (9), dans la deuxième position de pivotement des parties pivotantes (2, 3), peut être introduit dans les ouvertures affleurantes (6, 6', 7, 7') pour bloquer les parties pivotantes (2, 3) par rapport à un pivotement des parties pivotantes (2, 3) l'une par rapport à l'autre autour du pivot (S).

8. Point d'ancrage selon au moins l'une des revendications précédentes, dans lequel l'articulation (4) est disposée de façon décentrée sur les parties pivotantes (2, 3) et les ouvertures (6, 6', 7, 7') sont disposées de façon centrale sur les parties pivotantes (2, 3).

9. Point d'ancrage selon au moins l'une des revendications précédentes, dans lequel la première et la deuxième partie pivotante (2, 3) présentent une coulisse (19, 20) et les ouvertures (6, 6', 7, 7') sont conçues dans les coulisses respectives (19, 20).

10. Point d'ancrage selon la revendication précédente, dans lequel un moyen de blocage (9) peut être déplacé dans ou sur la coulisse (19, 20) et la coulisse (19) disposée dans ou sur la première partie pivotante (2) présente une ouverture de desserrage (15) reliée à l'ouverture (6, 6'), dans lequel, un moyen de blocage (9) étant disposé dans l'ouverture de desserrage (15), le blocage des parties pivotantes (2, 3) prévu dans la deuxième position de pivotement est supprimé, et les parties pivotantes (2, 3) se trouvent dans la première position de pivotement.

11. Point d'ancrage selon la revendication précédente, dans lequel lors d'un soulèvement du point d'ancrage (1), lorsque celui-ci se trouve dans la deuxième position de pivotement des parties pivotantes (2, 3), le moyen de blocage (9) arrive dans l'ouverture de desserrage (15) par le propre poids du point d'ancrage (1) ou par une mise en contact d'au moins un des prolongements (5) sur la bordure de l'ouverture d'ancrage (17).

12. Point d'ancrage selon au moins l'une des revendications précédentes, dans lequel une sangle d'ancrage (18) est reliée au point d'ancrage (1).

13. Utilisation d'un point d'ancrage selon au moins l'une des revendications précédentes pour caler un chargement, plus particulièrement des véhicules, sur un véhicule utilitaire, notamment sur une plaque de roulement d'un transporteur de véhicules.
